# EUROPÄISCHE PATENTSCHRIFT

(11) **EP 0 532 973 B1**
(45) Veröffentlichungstag und Bekanntmachung des Hinweises auf die Patenterteilung: **15.05.1996**
(21) Anmeldenummer: 92114931.6
(22) Anmeldetag: 01.09.1992
(51) Int. Cl.: H04B 3/23

(54) **Verfahren und Schaltungsanordnung zum Kompensieren von Echosignalen bei einer Digitalsignalübertragung über eine Zweidrahtleitung**
Method and circuit for cancelling echo signals during digital signal transmission over a two-wire line
Procédé et circuit de compensation de signaux d'écho lors d'une transmission d'un signal numérique par une ligne bifilaire

(30) Priorität: 19.09.1991 DE 4131253
(43) Veröffentlichungstag der Anmeldung: 24.03.1993
(73) Patentinhaber: SIEMENS AKTIENGESELLSCHAFT, D-80333 München (DE)
(72) Erfinder: Haass, Adolf, W-8000 München 60 (DE)

(56) Entgegenhaltungen:
- EP-A- 0 179 998

## Beschreibung

Die Erfindung betrifft ein Verfahren und eine Schaltungsanordnung gemäß Oberbegriff des Patentanspruches 1 bzw. des Patentanspruches 5.

Aus EP-A-0 280 898 sind bereits ein Verfahren und eine Schaltungsanordnung zum Kompensieren von bei einer Duplex-Übertragung von Digitalsignalen im Gleichlageverfahren über eine Zweidraht-Leitung in einer Übertragungseinrichtung auftretenden Echosignalen bekannt. Dieser Übertragungseinrichtung sind eine Sendeeinrichtung sowie eine Empfangseinrichtung zugehörig, die einerseits über eine Gabelanordnung an die Zweidraht-Leitung angeschlossen und andererseits über eine Kompensatoranordnung miteinander verbunden sind, wobei die Kompensatoranordnung einerseits nach Maßgabe der dieser von der Sendeeinrichtung her zugeführten Digitalsignale Kompensationssignale an die Empfangseinrichtung abgibt und andererseits von der Empfangseinrichtung her den mit Hilfe der Kompensationssignale korrigierten Digitalsignalen entsprechende Einstellsignale zum adaptiven Einstellen von für die Bildung der Kompensationssignale herangezogenen Kompensationskoeffizienten zugeführt erhält.

Darüber hinaus ist es aus EP-A-0 179 998 bekannt, ein derartiges Verfahren bzw. eine derartige Schaltungsanordnung so auszubilden, daß der Kompensatoranordnung als Einstellsignale die Amplitudenwerte der mit Hilfe der Kompensationssignale korrigierten Digitalsignale zugeführt und für nach Maßgabe der betreffenden Amplitudenwerte gegebenenfalls erforderliche Änderungen der einzelnen Kompensationskoeffizienten amplitudenwertabhängige Korrekturwerte benutzt werden. Dabei ist bei diesem bekannten Verfahren bzw. bei dieser bekannten Schaltungsanordnung vorgesehen, daß ein zur Einstellung der Kompensatoranordnung dienendes Einstellsignal mit einem zusätzlichen Einstellsignal verknüpft ist, welches aus einem die Verstärkung eines der Empfangseinrichtung zugehörigen Regelverstärkers angebenden Verstärkungseinstellsignal und aus einem die Größe des betreffenden Verstärkungseinstellsignals angebenden Änderungssignals gebildet ist und daß die Kompensatoranordnung eine Schieberegisteranordnung umfaßt, deren Registerinhalt änderbar und lediglich entsprechend dem Registerbereich einer Mehrzahl von höherwertigen Registerstellen als Kompensationssignal benutzt ist.

Die Größe der bei einer Duplex-Übertragung von Digitalsignalen im Gleichlageverfahren über eine Zweidraht-Leitung auftretenden Echosignale ist einerseits von der Entkopplung der beiden Übertragungsrichtungen durch die bei einer solchen Übertragung vorgesehene Gabelanordnung und andererseits von möglichen Reflexionsstellen der Zweidraht-Leitung abhängig. Diese Echosignale müssen von der Kompensatoranordnung auf einen den über die Zweidraht-Leitung übertragenen Digitalsignalen entsprechenden Wert reduziert werden. Dabei muß die Kompensatoranordnung um so genauer arbeiten, je kleiner die über die Zweidraht-Leitung aufgenommenen Digitalsignale sind. Dabei müssen beispielsweise die nach einer Echokompensation in Digitalsignalen noch verbleibenden Restechosignalanteile lediglich noch einen Wert von < -55 dB annehmen, damit bei einer angenommenen Leitungsdämpfung von 40 dB der Signal-/ Störabstand für eine Fehlerrate von 10⁻⁶ noch ausreichend groß ist.

Bei einer Inbetriebnahme einer Datenübertragungsstrecke bzw. bei einer starken Änderung der Übertragungseigenschaften dieser Datenübertragungsstrecke ist zunächst die für die Echokompensation vorgesehene Kompensatoranordnung nicht auf diese Datenübertragungsstrecke abgeglichen. Damit treten in einer Einlaufphase der Kompensatoranordnung trotz einer Echokompensation in Digitalsignalen in der Regel Restechosignalanteile auf, die von ihrem Pegel her die eigentlichen Digitalsignale wesentlich überschreiten.

Es ist nun Aufgabe der vorliegenden Erfindung, einen Weg zu zeigen, wie bei einem Verfahren gemäß Oberbegriff des Patentanspruches 1 bzw. bei einer Schaltungsanordnung gemäß Oberbegriff des Patentanspruches 5 ein schnelles Einlaufen einer Kompensatoranordnung und zugleich eine hohe Stabilität der Kompensatoranordnung im eingelaufenen Zustand erreicht werden kann.

Gelöst wird diese Aufgabe bei einem Verfahren gemäß Oberbegriff des Patentanspruches 1 durch die in diesem Patentanspruch angegebenen Verfahrensmerkmale. Der Vorteil der Erfindung besteht dabei darin, daß mit einem geringen zusätzlichen Steuerungsaufwand einerseits die Korrekturwerte für die Kompensationskoeffizienten an die Amplitudenwerte der kompensierten Digitalsignale angepaßt sind, d. h. daß das Verhältnis der Korrekturwerte zu den Amplitudenwerten einen für die Stabilität der Kompensatoranordnung ausschlaggebenden, zumindest annähernd konstanten Wert aufweist. Andererseits ist durch den Zeitversatz zwischen der Änderung der Amplitudenwerte und der entsprechenden Korrekturwerte für die Kompensationskoeffizienten ein ausreichend schnelles Einlaufen der Kompensatoranordnung erreicht.

Bei Ausgestaltung des Verfahrens gemäß der Erfindung in der im Patentanspruch 2 angegebenen Weise wird eine weitere Reduzierung des Steuerungsaufwandes bei einer für allgemeine Anwendungsfälle ausreichenden Stabilität der Kompensatoranordnung erzielt.

Eine darüber hinausgehende Reduzierung des Steuerungsaufwandes wird dann erreicht, wenn das Verfahren gemäß der Erfindung in der im Patentanspruch 3 angegebenen Weise ausgebildet ist. Denn diese Maßnahme läuft darauf hinaus, daß die Änderung der Korrekturwerte nach Maßgabe der Amplitudenwerte lediglich an unterschiedlichen Bitstellen durchzuführen ist.

Eine weitere zweckmäßige Ausgestaltung des Verfahrens gemäß der Erfindung ergibt sich aus dem Patentanspruch 4. Durch diese Maßnahme kann beispielsweise eine Kompensatoranordnung in einfacher Weise an unterschiedliche Einlaufzeitanforderungen angepaßt werden.

Die vorstehend aufgezeigte Aufgabe wird bei einer Schaltungsanordnung gemäß Oberbegriff des Patentanspruches 5 durch die in diesem Patentanspruch angegebenen schaltungstechnischen Merkmale gelöst. Diese Schaltungsanordnung zeichnet sich durch den Vorteil eines geringen zusätzlichen schaltungstechnischen Aufwandes aus, um für eine Kompensatoranordnung ein schnelles Einlaufen sowie eine ausreichende Stabilität im eingelaufenen Zustand zu erreichen.

Im folgenden wird nun die Erfindung anhand von Zeichnungen beispielsweise näher erläutert.
FIG 1 zeigt ein Blockschaltbild einer Sende- und Empfangseinrichtung, bei der die Erfindung angewandt ist,
FIG 2 zeigt einen möglichen Aufbau einer in FIG 1 lediglich schematisch dargestellten Kompensatoranordnung und
FIG 3 zeigt Signaldiagramme, auf die im folgenden noch näher eingegangen wird.

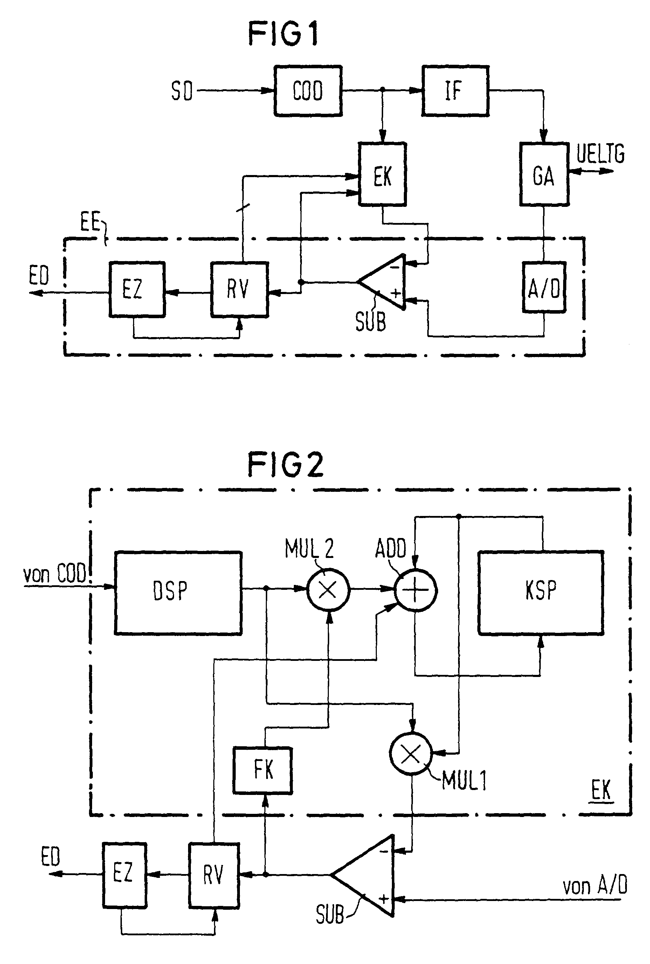

In FIG 1 ist ein Prinzipschaltbild einer Sende- und Empfangseinrichtung für die Übertragung von Digitalsignalen im Gleichlageverfahren über eine Zweidraht-Leitung UELTG dargestellt. In dieses Prinzipschaltbild sind dabei lediglich die für das Verständnis der vorliegenden Erfindung erforderlichen Schaltungsteile aufgenommen. Bei den Digitalsignalen kann es sich um beliebige mehrstufige Signale handeln, wie z. B. Binärsignale oder bei einer derartigen Übertragung häufig verwendete AMI-codierte Signale. Nachfolgend wird von den zuletzt genannten Signalen ausgegangen.

Von der Sende- und Empfangseinrichtung werden als Nachrichtensignale über die Zweidraht-Leitung UELTG zu übertragende Binärsignale SD zunächst mit Hilfe eines Codierers COD in AMI-codierte Digitalsignale umgesetzt und nach einer Impulsformung in einem Impulsformer IF als analoge Signale über eine Gabelanordnung GA abgegeben. Die Impulsformung richtet sich dabei nach den bandbegrenzenden Eigenschaften der Zweidraht-Leitung UELTG.

Von der betreffenden Sende- und Empfangseinrichtung über die Zweidraht-Leitung aufzunehmende analoge Signale durchlaufen zunächst die bereits erwähnte Gabelanordnung GA und gelangen anschließend zu der in FIG 1 dargestellten Digitalsignal-Empfangseinrichtung EE. Den Eingang dieser Empfangseinrichtung bildet dabei ein Analog/Digital-Wandler A/D, der den über die Gabelanordnung zugeführten analogen Signalen Abtastproben beispielsweise in einem einer Bitlänge der übertragenen Digitalsignale entsprechenden zeitlichen Abstand entnimmt und diese Abtastproben jeweils in ein Digitalsignal vorgegebener Bitanzahl umsetzt. Die dafür erforderlichen Abtasttaktimpulse werden von einem nicht dargestellten Taktgenerator bereitgestellt.

Die von dem Analog/Digital-Wandler A/D bereitgestellten Digitalsignale werden anschließend nacheinander einem Subtrahierer SUB zugeführt, der gleichzeitig mit Kompensationssignalen von einer Kompensatoranordnung EK her beaufschlagt ist. Durch diese Kompensationssignale werden in den Digitalsignalen jeweils enthaltene Echosignalanteile kompensiert, die bei der zuvor beschriebenen Abgabe von Digitalsignalen in analoger Form über die Zweidraht-Leitung UELTG den empfangenen analogen Signalen durch Reflexionen auf dieser Leitung bzw. durch eine nicht vollständige Entkopplung der Übertragungswege der Gabelanordnung GA überlagert sind.

Die auf diese Weise kompensierten Digitalsignale werden anschließend über eine Regelverstärkeranordnung RV an einen Entzerrer EZ weitergeleitet, der die durch die Übertragungscharakteristik der Zweidraht-Leitung UELTG bedingten Verzerrungen der über die Zweidraht-Leitung in analoger Form aufgenommenen Digitalsignale weitgehend aufhebt. Die am Ausgang des Entzerrers EZ auftretenden entzerrten Digitalsignale ED werden anschließend in FIG 1 nicht dargestellten Einrichtungen für eine weitere Auswertung zugeführt. Die Regelverstärkeranordnung RV ist dabei hinsichtlich ihrer Verstärkung durch von dem Entzerrer EZ abgegebene Regelsignale einstellbar.

Die zuvor erwähnte Kompensatoranordnung EK ist, wie im folgenden noch näher erläutert werden wird, adaptiv einstellbar. Dazu ist diese einerseits mit dem Ausgang des Subtrahierers SUB und andererseits mit Steuerausgängen der Regelverstärkeranordnung RV verbunden.

Im folgenden wird lediglich auf die Kompensatoranordnung EK und die Regelverstärkeranordnung RV näher eingegangen, da die Wirkungsweise der übrigen Schaltungsteile der in FIG 1 dargestellten Sende- und Empfangseinrichtung bereits hinlänglich bekannt ist. Ein möglicher Aufbau der Kompensatoranordnung geht dabei aus FIG 2 hervor.

Wie bereits zuvor erwähnt, werden dem Subtrahierer SUB von dem Analog-Digital-Wandler A/D her gemäß dem obigen Beispiel AMI-codierte Digitalsignale zugeführt, denen jeweils Störsignale in Form von Echosignalanteilen überlagert sind, die durch die Abgabe von Digitalsignalen über die Gabelanordnung GA an die Zweidraht-Leitung UELTG verursacht sind. Um die in den einzelnen Digitalsignalen jeweils enthaltenen Störsignale zu kompensieren, erhält der Subtrahierer SUB an einem zweiten Eingang Kompensationssignale von der Kompensatoranordnung EK zugeführt.

Für die Erzeugung derartiger Kompensationssignale wird eine festgelegte Anzahl von am Ausgang des Codierers COD (FIG 1) nacheinander auftretenden AMI-codierten Digitalsignalen in der Reihenfolge ihres Auftretens in einem Datenspeicher DSP zwischengespeichert. Dieser Datenspeicher kann beispielsweise als Schieberegister ausgebildet sein. Die genannte Anzahl von zwischengespeicherten AMI-codierten Digitalsignalen entspricht dabei der Anzahl aufeinanderfolgender Digitalsignale, die aufgrund der in dem Impulsformer IF (FIG 1) vorgenommenen Impulsformung und des Einschwingverhaltens der Zweidraht-Leitung (UELTG) einen Echosignalanteil zu einem gerade dem Subtrahierer SUB zugeführten Digitalsignal liefern. Darüber hinaus ist in einem Koeffizientenspeicher KSP jedem der in dem Datenspeicher DSP gespeicherten AMI-codierten Digitalsignale ein gesonderter Kompensationskoeffizient in digitaler Form zugeordnet. Der Wert des jeweiligen Kompensationskoeffizienten hängt dabei von dem Echosignalanteil ab, den das zugeordnete AMI-codierte Digitalsignal in einem gerade am Eingang des Subtrahierers SUB anliegenden Digitalsignal verursacht.

Durch einen Multiplizierer MUL1 werden die in dem Datenspeicher DSP gerade gespeicherten AMI-codierten Digitalsignale nacheinander jeweils mit dem zugeordneten, in dem Koeffizientenspeicher KSP gespeicherten Kompensationskoeffizienten multipliziert und die einzelnen Produktsignale aufsummiert. Der daraus resultierende Summenwert stellt ein oben erwähntes digitales Kompensationssignal dar, welches dem Subtrahierer SUB für eine Kompensation der Echosignalanteile des an diesem gleichzeitig anliegenden Digitalsignals zugeführt ist. Im übrigen läuft die gerade erwähnte Bildung der Produkte und deren anschließende Aufsummmierung bei der angenommenen AMI-Codierung, bei der die einzelnen codierten Digitalsignale jeweils lediglich einen Wert + 1, - 1 und 0 annehmen können, darauf hinaus, daß lediglich diejenigen Kompensationskoeffizienten vorzeichengerecht aufsummiert werden, deren zugeordnetes AMI-codiertes Digitalsignal einen Wert + 1 oder - 1 aufweist.

Darüber hinaus werden auf das Bereitstellen eines digitalen Kompensationssignals hin die in dem Koeffizientenspeicher KSP gespeicherten Kompensationskoeffizienten ggf. korrigiert. Dazu wird mit Hilfe eines Fehlerkomparators FK ein ggf. in dem gerade am Ausgang des Subtrahierers SUB auftretenden kompensierten Digitalsignal noch enthaltener Restechofehler ermittelt, der größer oder kleiner als "0" sein kann, je nachdem, ob das betreffende Digitalsignal oberhalb oder unterhalb eines bestimmten Sollwertes liegt. Der Fehlerkomparator FK gibt an seinem Ausgang bei Vorliegen eines positiven Restechofehlers (größer "0") ein Fehlersignal mit einem Wert + 1, bei Vorliegen eines negativen Restechofehlers (kleiner "0") dagegen ein Fehlersignal mit einem Wert - 1 ab. Das dabei in Frage kommende Fehlersignal wird anschließend mit Hilfe eines Multiplizierers MUL2 nacheinander mit jedem der in dem Datenspeicher DSP gespeicherten AMI-codierten Digitalsignale multipliziert. Das jeweilige, daraus resultierende Produktsignal (+ 1, 0 oder - 1) ist einem Addierer ADD zugeführt, der gleichzeitig von dem Koeffizientenspeicher DSP her mit dem dem jeweiligen AMI-codierten Digitalsignal zugeordneten Kompensationskoeffizienten beaufschlagt ist. Damit wird der jeweilige Kompensationskoeffizient um einen durch das gerade genannte Produktsignal gegebenen Wert in nachfolgend noch zu erläuternder Weise verändert. Die veränderten Kompensationskoeffizienten werden dann nacheinander in den Koeffizientenspeicher KSP zurückübertragen, und zwar unter Überschreiben der bisher darin gespeicherten Kompensationskoeffizienten.

Der Kompensatoranordnung EK werden außerdem von der bereits erwähnten Regelverstärkeranordnung RV her Regelsignale zugeführt, durch die jeweils der Amplitudenwert eines am Ausgang des Subtrahierers SUB gerade anstehenden kompensierten Digitalsignals angezeigt ist. Die Regelverstärkeranordnung RV ist dabei bei dem vorliegenden Ausführungsbeispiel so ausgelegt, daß durch die Regelsignale Amplitudenwerte in einem 6 db-Amplitudenraster angezeigt werden, d. h. daß zwei innerhalb des möglichen Amplitudenbereiches unmittelbar aufeinanderfolgende Amplitudenwerte sich um den Faktor 2 unterscheiden.

Durch diese Auslegung der Regelverstärkeranordnung RV können die Regelsignale in binärcodierter Form mit einer der möglichen Anzahl der durch das Amplitudenraster festgelegten Amplitudenwerte entsprechenden Anzahl von Bits bereitgestellt werden. Dabei ist jeder der möglichen Amplitudenwerte durch einen festgelegten logischen Pegel, z. B. logisch "1", an einer bestimmten Bitstelle innerhalb dieser Anzahl von Bits markiert. Dadurch läuft bei zeitlich aufeinanderfolgenden Amplitudenwerten, die sich um 6 db unterscheiden, eine Änderung der zugehörigen Regelsignale darauf hinaus, daß der gerade erwähnte logische Pegel lediglich um eine Bitstelle verschoben wird.

Die Bereitstellung der Regelsignale durch die Regelverstärkeranordnung RV erfolgt dabei mit einem festgelegten Zeitversatz gegenüber dem Auftreten der zugehörigen Amplitudenwerte. Der Zeitversatz beträgt bei dem voliegenden Ausführungsbeispiel die Hälfte der für die Kompensatoranordnung EK geforderten Einlaufzeit. Bei einer geforderten Einlaufzeit von 2 s werden also die Regelsignale mit einem Zeitversatz von 1 s bereitgestellt.

Die der Kompensatoranordnung EK zugeführten Regelsignale bewirken jeweils in dieser, daß die zuvor erläuterte Korrektur der Kompensationskoeffizienten durch den Addierer ADD an einer dem jeweiligen Regelsignal entsprechenden Bitstelle der zu korrigierenden Kompensationsskoeffizienten durchgeführt wird. D. h. die zuvor erwähnten, für die Korrektur der gespeicherten Kompensationskoeffizienten von dem Multiplizierer MUL2 her nacheinander abgegebenen Produktsignale werden jeweils nach Maßgabe eines gerade von der Regelverstärkeranordnung RV gelieferten Regelsignals vorzeichengerecht an einer bestimmten Bitstelle zu den zu korrigierenden Kompensationskoeffizienten addiert. Der Addierer ADD erhält dazu die von der Regelverstärkeranordnung RV abgegebenen Regelsignale zugeführt. Damit erfolgt auch die Korrektur der Kompensationskoeffizienten in einem 6 db-Raster.

Dies bringt auch hier den Vorteil mit sich, daß eine Änderung der Kompensationskoeffizienten um einen Rasterschritt lediglich auf eine Bitverschiebung um eine Bitstelle hinausläuft.

In einer Einlaufphase der Kompensatoranordnung EK, in welcher die Kompensationskoeffizienten noch nicht ordnungsgemäß abgeglichen sind, treten zunächst am Ausgang des Subtrahierers SUB Digitalsignale auf, die jeweils einen hohen Restechoanteil aufweisen. Dementsprechend liegt bei den betreffenden Digitalsignalen zunächst ein hoher Amplitudenwert vor. Dieser führt wiederum dazu, daß die Regelverstärkeranordnung RV Regelsignale bereitstellt, die entsprechend dem hohen Amplitudenwert eine Korrektur der Kompensationskoeffizienten an einer höherwertigen Bitstelle hervorrufen. Durch die korrigierten Kompensationskoeffizienten ändern sich dann die von der Kompensatoranordnung EK abgegebenen Kompensationssignale derart, daß sich der in den am Ausgang des Subtrahierers SUB auftretenden Digitalsignalen enthaltene Restechofehler und damit deren Amplitudenwert reduziert. Entsprechend diesem verringerten Amplitudenwert werden dann die Kompensationskoeffizienten in der oben angegebenen Weise an niederwertigeren Bitstellen korrigiert. Ein solches Korrigieren der Kompensationskoeffiziienten wird fortlaufend weitergeführt, so daß nach und nach der in den am Ausgang des Subtrahierers SUB auftretenden Digitalsignalen noch enthaltene Restechofehler der geforderten Genauigkeit für die Echokompensation entspricht. In diesem Falle entsprechen die Amplitudenwerte der am Ausgang des Subtrahierers SUB auftretenden Digitalsignale den Amplituden der über die Zweidraht-Leitung UELTG empfangenen analogen Signale (Nutzsignale). In diesem Zustand der Kompensatoranordnung EK erfolgt dann eine Korrektur der Kompensationskoeffizienten bei sich ändernden Amplitudenwerten am Ausgang des Subtrahierers SUB lediglich noch an niederwertigen Bitstellen, so daß sich eine entsprechend hohe Stabilität der Kompensatoranordnung EK einstellt.

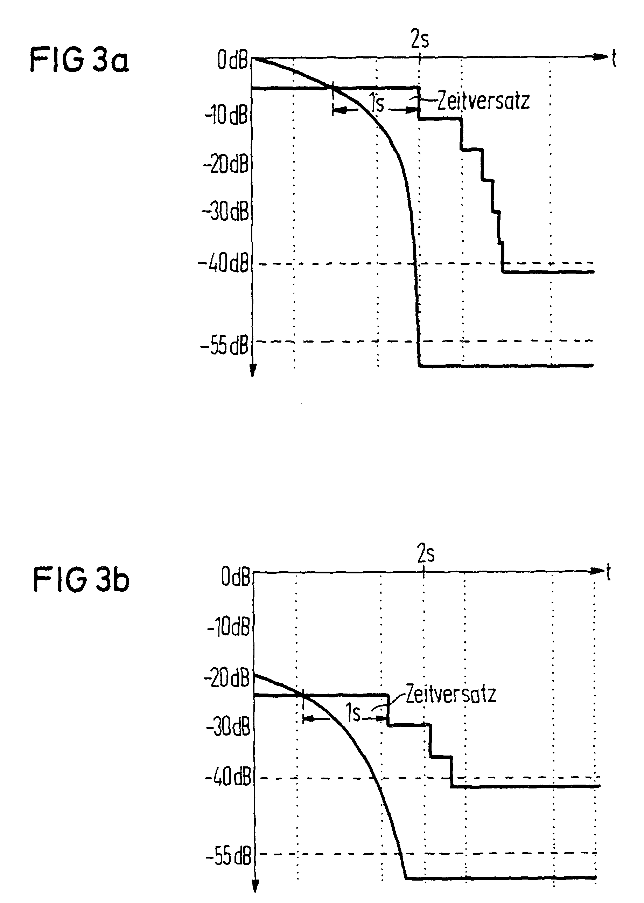

Durch den zuvor erläuterten Zeitversatz zwischen der Änderung von Amplitudenwerten und der Bereitstellung entsprechend geänderter Regelsignale durch die Regelverstärkeranordnung RV wird bei dem gerade beschriebenen Abgleich der Kompensationskoeffizienten eine Einlaufgeschwindigkeit der Kompensatoranordnung EK erreicht, die wesentlich höher liegt als eine bei einem Abgleich von Kompensationskoeffizienten ohne einen solchen Zeitversatz erzielbare Einlaufgeschwindigkeit. Darüber hinaus wird durch den Zeitversatz erreicht, daß die Einlaufgeschwindigkeit weitgehend unabhängig von den zu Beginn der Einlaufphase am Ausgang des Subtrahierers SUB auftretenden Amplitudenwerten ist. Dies geht aus den beiden in FIG 3 dargestellten Signaldiagrammen hervor. In beiden Signaldiagrammen ist dabei einerseits anhand einer kontinuierlichen Kurve die Veränderung der Amplitudenwerte der am Ausgang des Subtrahierers SUB auftretenden Digitalsignale und andererseits anhand einer treppenförmigen Kurve die zeitversetzte Änderung der Kompensationskoeffizienten um jeweils 6 dB dargestellt. Dabei ist ein Amplitudenwert für die über die Zweidraht-Leitung UELTG aufgenommenen analogen Signale (Nutzsignale) mit - 40 dB, ein geforderter Amplitudenwert für den Restechoanateil im abgeglichenen Zustand der Kompensatoranordnnung dagegen mit - 55 dB angenommen. Diese beiden Amplitudenwerte sind in den Signaldiagrammen durch waagerechte unterbrochene Linien dargestellt. Unterschiede in den Signaldiagrammen bestehen lediglich darin, daß in dem mit a) bezeichneten Signaldiagramm zu Beginn der Einlaufphase, die 2 s betragen möge, von einem Amplitudenwert von 0 dB für den Restechoanteil, in dem mit b) bezeichneten Signaldiagramm dagegen von einem Amplitudenwert von - 20 dB ausgegangen wird.

Nach dem Signaldiagramm a) werden die am Ausgang des Subtrahierers SUB mit einem Amplitudenwert von 0 dB auftretenden Digitalsignale durch Kompensationssignale kompensiert, deren zugehörige Kompensationskoeffizienten sich fortlaufend um einen einem Amplitudenwert von - 6 dB entsprechenden Wert ändern. Bei Erreichen dieses Amplitudenwertes von - 6 dB bleibt zunächst der Korrekturwert der Kompensationskoeffizienten für die Dauer des festgelegten Zeitversatzes von 1 s erhalten. Erst mit diesem Zeitversatz wird dann der Korrekturwert für die Kompensationskoeffizienten entsprechend dem aufgetretenen niedrigeren Amplitudenwert um 6 dB reduziert. Erreicht der Amplitudenwert dann einen Wert von - 12 dB, erfolgt wieder mit dem festgelegten Zeitversatz von 1 s eine Reduzierung des Korrekturwertes um 6 dB. Dieses amplitudenwertabhängige, zeitversetzte Reduzieren der Korrekturwerte für die Kompensationskoeffizienten wird fortgesetzt, bis der Korrekturwert einen Wert annimmt, der dem Amplitudenwert der Digitalsignale im abgeglichenen Zustand der Kompensatoranordnung entspricht, bei dem oben angegebenen Beispiel also - 40 dB. Dieser Korrekturwert wird dann bei erforderlichen Änderungen der Kompensationskoeffizienten im abgeglichenen Zustand der Kompensatoranordnung beibehalten.

Den gerade erläuterten Steuerungsvorgängen entsprechende Steuerungsvorgänge ergeben sich auch für die im Signaldiagramm b) dargestellten Amplitudenverhältnisse, nach denen der Amplitudenwert für den Restechoanteil zu Beginn der Einlaufphase der Kompensatoranordnung - 20 dB beträgt.

Wie ein Vergleich der beiden Signaldiagramme a) und b) ergibt, ist die als Beispiel angenommene Einlaufzeit von 2 s durch die zeitversetzte Änderung der Korrekturwerte der Kompensationskoeffizienten weitgehend unabhängig von dem Amplitudenwert des Restechoanteiles zu Beginn der Einlaufphase der Kompensatoranordnung.

Abschließend sei noch darauf hingewiesen, daß die zuvor erläuterte Kompensatoranordnung auch derart modifiziert sein kann, daß diese durch einen Signalprozessor gebildet ist, der nach Maßgabe der von der oben erwähnten Regelverstärkeranordnung RV abgegebenen Regelsignale die zuvor erläuterten Verfahrensschritte für die Bereitstellung von Kompensationssignalen und für die Änderung der diesen entsprechenden Komnpensationskoeffizienten abwickelt. Dabei kann der oben erwähnte Zeitversatz für diese Änderung auch durch den Signalprozessor gesteuert werden.

## Patentansprüche

1. Verfahren zum Kompensieren von bei einer Duplex-Übertragung von Digitalsignalen im Gleichlageverfahren über eine Zweidraht-Leitung (UELTG) in einer Übertragungseinrichtung auftretenden Echosignalen, welcher eine Sendeeinrichtung (COD, IF) sowie eine Empfangseinrichtung (EE) zugehörig sind, die einerseits über eine Gabelanordnung (GA) an die Zweidraht-Leitung angeschlossen und andererseits über eine Kompensatoranordnung (EK) miteinander verbunden sind,
wobei die Kompensatoranordnung (EK) einerseits nach Maßgabe der dieser von der Sendeeinrichtung (COD, IF) her zugeführten Digitalsignale Kompensationssignale an die Empfangseinrichtung (EE) abgibt und andererseits von der Empfangseinrichtung her den mit Hilfe der Kompensationssignale korrigierten Digitalsignalen entsprechende Einstellsignale zum adaptiven Einstellen von für die Bildung der Kompensationssignale herangezogenen Kompensationskoeffizienten zugeführt erhält,
wobei der Kompensatoranordnung (EK) als Einstellsignale die Amplitudenwerte der mit Hilfe der Kompensationssignale korrigierten Digitalsignale zugeführt und für nach Maßgabe der betreffenden Amplitudenwerte gegebenenfalls erforderliche Änderungen der einzelnen Kompensationskoeffizienten amplitudenwertabhängige Korrekturwerte benutzt werden,
**dadurch gekennzeichnet**,
daß auf sich verändernde Amplitudenwerte hin die Korrekturwerte für die Kompensationskoeffizienten mit einem festgelegten Zeitversatz verändert werden.

2. Verfahren nach Anspruch 1,
**dadurch gekennzeichnet**,
daß die Korrekturwerte lediglich bei Vorliegen festgelegter, mit einem konstanten Amplitudenwertverhältnis aufeinanderfolgender Amplitudenwerte jeweils um einen konstanten, dem betreffenden Amplitudenwertverhältnis entsprechenden Wert verändert werden.

3. Verfahren nach Anspruch 2,
**dadurch gekennzeichnet**,
daß das Amplitudenwertverhältnis zweier aufeinanderfolgender Amplitudenwerte sowie der Wert für die Änderung der Korrekturwerte mit 6dB festgelegt werden.

4. Verfahren nach einem der Ansprüche 1 bis 3,
**dadurch gekennzeichnet**,
daß der Zeitversatz für die Änderung der Korrekturwerte der Hälfte der für das Einstellen der Kompensatoranordnung (EK) geforderten Einlaufzeit entspricht.

5. Schaltungsanordnung zum Kompensieren von bei einer Duplex-Übertragung von Digitalsignalen im Gleichlageverfahren über eine Zweidraht-Leitung (UELTG) auftretenden Echosignalen, mit einer Übertragungseinrichtung, welcher eine Sendeeinrichtung (COD, IF) sowie eine Empfangseinrichtung (EE) zugehörig sind, die einerseits über eine Gabelanordnung (GA) an die Zweidraht-Leitung angeschlossen und andererseits über eine Kompensatoranordnung (EK) miteinander verbunden sind, wobei die Kompensatoranordnung einerseits nach Maßgabe der dieser von der Sendeeinrichtung (COD, IF) her zugeführten Digitalsignale Kompensationssignale an eine der Empfangseinrichtung (EE) zugehörige Verknüpfungsanordnung (SUB) abgibt, die die Kompensationssignale mit den der Empfangseinrichtung zugeführten Digitalsignalen verknüpft,
wobei der Kompensatoranordnung von der Empfangseinrichtung (EE) her den am Ausgang der Verknüpfungsanordnung (SUB) auftretenden Digitalsignalen entsprechende Einstellsignale zum adaptiven Einstellen von für die Bildung von Kompensationssignalen herangezogenen Kompensationskoeffizienten zugeführt sind
und wobei der Verknüpfungsanordnung (SUB) eine Steuereinrichtung (RV, FK) nachgeschaltet ist, welche einer Korrektureinrichtung (DSP, MUL2, ADD) Einstellsignale in Form von Amplitudenwerten der am Ausgang der Verknüpfungsanordnung (SUB) auftretenden Digitalsignale zuführt, und durch die Korrektureinrichtung (DSP, MUL2, ADD) nach Maßgabe der dieser zugeführten Einstellsignale die in einer Speicheranordnung (KSP) der Kompensatoranordnung (EK) gespeicherten Kompensationskoeffizienten gegebenenfalls jeweils um amplitudenwertabhängige Korrektursignale änderbar sind,
**dadurch gekennzeichnet**,
daß die Einstellsignale zusätzlich Angaben bezüglich der Richtung der Abweichung der Amplitudenwerte von einem festgelegten Sollwert enthalten und mit einem gegenüber den am Ausgang der Verknüpfungsanordnung (SUB) auftretenden Digitalsignalen festgelegten Zeitversatz zugeführt sind.

## Claims

1. Method for compensating echo signals occurring during duplex transmission of digital signals in common-frequency operation via a two-wire line (UELTG) in a transmission facility which includes a transmitter (COD, IF) and a receiver (EE) which, on the one hand, are connected to the two-wire line via a hybrid arrangement (GA) and, on the other hand, are interconnected via a compensator arrangement (EK), the compensator arrangement (EK) on the one hand emitting compensations signals, in accordance with the digital signals fed to it from the transmitter (COD, IF), to the receiver (EE), and on the other hand being fed from the receiver, for the purpose of adaptive adjustment of compensation coefficients used to form the compensation signals, adjusting signals corresponding to the digital signals corrected with the aid of the compensation signals, the compensator arrangement (EK) being fed as adjusting signals the amplitude values of the digital signals corrected with the aid of the compensation signals, and correction values which are a function of the amplitude value being used for changes to the individual compensation coefficients which may be required in accordance with the relevant amplitude values, characterized in that in response to varying amplitude values the correction values for the compensation coefficients are varied with a fixed time delay.

2. Method according to Claim 1, characterized in that the correction values are varied only upon the occurrence of fixed amplitude values, which succeed one another with a constant gain, in each case by a constant value corresponding to the relevant gain.

3. Method according to Claim 2, characterized in that the gain of two successive amplitude values and the value for the change to the correction values are fixed at 6 dB.

4. Method according to one of Claims 1 to 3, characterized in that the time delay for the change to the correction values corresponds to half the set-up time required for adjusting the compensator arrangement (EK).

5. Circuit arrangement for compensating echo signals occurring during duplex transmission of digital signals in common-frequency operation via a two-wire line (UELTG), having a transmission facility which includes a transmitter (COD, IF) and a receiver (EE) which, on the one hand, are connected to the two-wire line via a hybrid arrangement (GA) and, on the other hand, are interconnected via a compensator arrangement (EK), the compensator arrangement on the one hand emitting compensation signals, in accordance with the digital signals fed to it from the transmitter (COD, IF), to a logic arrangement (SUB) which is included in the receiver (EE) and combines the compensation signals with the digital signals fed to the receiver, the compensator arrangement being fed from the receiver (EE), for the purpose of adaptive adjustment of compensation coefficients used to form the compensation signals, adjusting signals corresponding to the digital signals occurring at the output of the logic arrangement (SUB), and there being connected downstream of the logic arrangement (SUB) a control device (RV, FK) which feeds adjusting signals in the form of amplitude values of the digital signals occurring at the output of the logic arrangement (SUB) to a correction device (DSP, MUL2, ADD), and the compensation coefficients stored in a storage arrangement (KSP) of the compensator arrangement (EK) being able to be changed, if necessary, in each case by correction signals, which are a function of the amplitude value, by the correction device (DSP, MUL2, ADD) in accordance with the adjusting signals fed to said correction device, characterized in that the adjusting signals additionally contain data relating to the direction of the deviation of the amplitude values from a fixed desired value and are fed with a time delay which is fixed with respect to the digital signals occurring at the output of the logic arrangement (SUB).

## Revendications

1. Procédé de compensation de signaux d'échos apparaissant lors d'une transmission en duplex de signaux numériques en exploitation des canaux en duplex par l'intermédiaire d'une ligne bifilaire (UELTG) dans un dispositif de transmission, auquel appartiennent un dispositif (COD, IF) d'émission ainsi qu'un dispositif (EE) de réception, lesquels sont d'une part connectés par l'intermédiaire d'un dispositif (GA) d'aiguillage à la ligne bifilaire et sont d'autre part reliés l'un à l'autre par l'intermédiaire d'un dispositif (EK) compensateur,
le dispositif (EK) compensateur fournissant d'une part au dispositif (EE) de réception en fonction des signaux numériques, qui lui sont envoyés en provenance du dispositif (COD, IF) d'émission, des signaux de compensation et recevant d'autre part, des signaux de réglage envoyés correspondant aux signaux numériques corrigés à l'aide des signaux de compensation et provenant du dispositif de réception pour le réglage adaptatif de coefficients de compensation utilisés pour la formation des signaux de compensation,
on envoie au dispositif (EK) compensateur comme signaux de réglage les valeurs d'amplitude des signaux numériques corrigés à l'aide des signaux de compensation et on utilise pour des modifications, éventuellement nécessaires en fonction des valeurs d'amplitude concernées, des divers coefficients de compensation, des valeurs de correction dépendant d'une valeur d'amplitude,
caractérisé en ce que
on change, lorsque des valeurs d'amplitude ont changé, les valeurs de correction pour les coefficients de compensation, avec un décalage temporel fixé.

2. Procédé suivant la revendication 1,
caractérisé en ce que
on change les valeurs de correction exclusivement en présence de valeurs d'amplitude fixées se suivant avec un rapport constant de valeur d'amplitude, d'une valeur constante correspondant au rapport de valeurs d'amplitude concernées.

3. Procédé suivant la revendication 2,
caractérisé en ce que
on fixe le rapport de valeurs d'amplitude de deux valeurs d'amplitude se suivant ainsi que la valeur pour le changement des valeurs de correction à 6 dB.

4. Procédé suivant l'une des revendications 1 à 3,
caractérisé en ce que
le décalage temporel pour le changement des valeurs de correction correspond à la moitié du temps de démarrage requis pour le réglage du dispositif (EK) compensateur.

5. Montage de compensation de signaux d'écho apparaissant lors d'une transmission en duplex de signaux numériques en exploitation des canaux en duplex par l'intermédiaire d'une ligne bifilaire (UELTG), comportant un dispositif de transmission, dont font partie un dispositif (COD, IF) d'émission et un dispositif (EE) de réception, qui d'une part sont connectés par l'intermédiaire d'un dispositif (GA) d'aiguillage à la ligne bifilaire et qui sont reliés l'un à l'autre d'autre part par l'intermédiaire d'un dispositif (EK) compensateur, le dispositif compensateur fournissant d'une part, en fonction des signaux numériques, qui lui sont envoyés en provenance du dispositif (COD, IF) d'émission, des signaux de compensation à un dispositif (SUB) de combinaison, qui fait partie du dispositif (EE) de réception et qui combine les signaux de compensation avec les signaux numériques envoyés au dispositif de réception,
il est envoyé au dispositif compensateur des signaux de réglage en provenance du dispositif (EE) de réception et correspondant aux signaux numériques apparaissant à la sortie du dispositif (SUB) de combinaison et destiné au réglage adaptatif de coefficients de compensation utilisés pour la formation de signaux de compensation
et il est branché en aval du dispositif (SUB) de combinaison un dispositif (RV, FK) de commande, qui envoie à un dispositif (DSP, MUL2, ADD) de correction des signaux de réglage sous forme de valeurs d'amplitude des signaux numériques apparaissant à la sortie du dispositif (SUB) de combinaison, et les coefficients de compensation mémorisés dans un dispositif (KSP) de mémorisation du dispositif (EK) compensateur pouvant être changé éventuellement de signaux de correction dépendant d'une valeur d'amplitude par le dispositif (DSP, MUL2, ADD) de correction en fonction des signaux de réglage qui lui sont envoyés,
caractérisé en ce que
les signaux de réglage comprennent en supplément des indications du sens de l'écart des valeurs d'amplitude par rapport à une valeur de consigne fixée et sont envoyés en ayant un décalage temporel fixé par rapport aux signaux numériques apparaissant à la sortie du dispositif (SUB) de combinaison.
